# EUROPÄISCHE PATENTANMELDUNG

(11) **EP 4 335 273 A1**
(43) Veröffentlichungstag der Anmeldung: **13.03.2024**
(21) Anmeldenummer: 23401031.2
(22) Anmeldetag: 28.08.2023
(51) Int. Cl.: A01C 7/08, A01C 7/10, A01C 7/04

(54) **ELEKTRONISCHE VORRICHTUNG ZUM ERFASSEN VON GRANULAREM MATERIAL INNERHALB EINER LANDWIRTSCHAFTLICHEN VERTEILMASCHINE**

(30) Priorität: 09.09.2022 DE 102022122898
(71) Anmelder: Amazonen-Werke H. Dreyer SE & Co. KG, 49205 Hasbergen (DE)
(72) Erfinder: Wien, Thomas, 28816 Stuhr (DE); Radeke, Jan Philipp, 27211 Bassum (DE)

(57) **Zusammenfassung**

Elektronische Vorrichtung (40) zum Erfassen von granularem Material (G), insbesondere Saatgut und/oder Dünger, innerhalb einer landwirtschaftlichen Verteilmaschine (10), mit wenigstens einer Förderleitung (41), durch die das granulare Material (G) mittels Luftströmung (L) förderbar ist, und zumindest eine der Förderleitung (41) zugeordnete Sensoreinrichtung (50), welche dazu eingerichtet ist, das granulare Material (G), insbesondere in Form von vereinzelten Körnern, berührungsfrei innerhalb eines entlang der Förderleitung (41) angeordneten Messraums (51) der Sensoreinrichtung (50) zu erfassen. Um eine derartige elektronische Vorrichtungen (40) weiter zu verbessern, insbesondere durch Verringerung der Verschmutzungsneigung und/oder Erhöhung der Betriebssicherheit, ist wenigstens eine Strömungsabrisskante (60) vorgesehen, welche entlang der Förderleitung (41), vorzugsweise unmittelbar vor und/oder im Messraum (51), angeordnet ist, und welche dazu eingerichtet ist, die Luftströmung (L) im Bereich des Messraums (51) zumindest teilweise abzulösen und/oder zu verwirbeln.

## Beschreibung

Die Erfindung betrifft eine elektronische Vorrichtung zum Erfassen von granularem Material gemäß dem Oberbegriff des Patentanspruches 1 und eine landwirtschaftliche Verteilmaschine zum Ausbringen von granularem Material gemäß dem Oberbegriff des Patentanspruches 8.

Auf dem Gebiet der Landwirtschaft sind eine Vielzahl unterschiedlicher Varianten von Verteilmaschinen zum Ausbringen von granularem Material, insbesondere Saatgut und/oder Dünger, bekannt. Hierzu zählen neben pneumatischen Sämaschinen insbesondere auch Einzelkornsämaschinen, die dazu geeignet sind, das granulare Material auf einer landwirtschaftlichen Nutzfläche abzulegen. Derartige Verteilmaschinen weisen darüber hinaus neben wenigstens einem Vorratsbehälter zumindest eine Förderleitung auf, über die das granulare Material mittels Luftströmung wenigstens einem nachgeordneten Ausbringorgan zubringbar ist. Mit anderen Worten wird das im Vorratsbehälter vorgehaltene Material dabei in pneumatisch beaufschlagter Weise durch die eine oder die mehreren Förderleitungen zu den Ausbringorganen der Verteilmaschine zugebracht und auf der Nutzfläche, insbesondere einer dafür vorgesehenen Furche, abgelegt.

Moderne landwirtschaftliche Verteilmaschinen weisen vermehrt elektronische Vorrichtungen auf, welche dazu eingerichtet sind, das granulare Material entlang bzw. innerhalb von Förderleitungen zu erfassen, um eine bedarfsgerechte Ausbringung und/oder Ablage des Materials auf der Nutzfläche zu erreichen.

Solche elektronischen Vorrichtungen zum Erfassen von granularem Material innerhalb landwirtschaftlicher Verteilmaschinen sind beispielsweise aus den Druckschriften DE 10 2021 104 531 A1 und US 6 332 413 B1 bekannt. Demnach umfasst eine derartige elektronische Vorrichtung wenigstens eine der Förderleitung zugeordnete Sensoreinrichtung, welche dazu eingerichtet ist, das granulare Material, insbesondere in Form von vereinzelten Körnern, berührungsfrei innerhalb eines entlang der Förderleitung angeordneten Messraums der Sensoreinrichtung zu erfassen.

Problematisch hierbei sind Verschmutzungsablagerungen nach Art von Staub, Feuchtigkeit, Beize oder dergl., welche sich mit der Zeit im Bereich des Messraums, insbesondere der Sensoreinrichtung bzw. des Sensorsichtfelds, ansammeln und so die Präzision und/oder Zuverlässigkeit bei der Erfassung mittels derartiger elektronischer Vorrichtungen negativ beeinträchtigen. Derartige Verschmutzungsablagerungen können ferner zu einem sogenannten "erblinden" der Sensoreinrichtung führen, so dass einzelne und/oder sämtliche Körner des granularen Materials mittels der elektronischen Vorrichtungen nicht mehr erkennbar und/oder erfassbar sind.

Im Stand der Technik sind ferner elektronische Vorrichtungen bekannt, welche zum Verringern von Verschmutzungsablagerungen eine Verengung des Förderleitungsquerschnitts, insbesondere vor dem Messraum und/oder der Sensoreinrichtung, aufweisen. Derartige Lösungen haben sich jedoch hinsichtlich der Verstopfungsanfälligkeit der Förderleitung als nachteilig erwiesen.

Die der Erfindung zugrunde liegende Aufgabe besteht somit darin, derartige elektronische Vorrichtungen zum Erfassen von granularem Material innerhalb landwirtschaftlicher Verteilmaschinen weiter zu verbessern, insbesondere durch Verringerung der Verschmutzungsneigung und/oder Erhöhung der Betriebssicherheit.

Diese Aufgabe wird erfindungsgemäß durch wenigstens eine Strömungsabrisskante gelöst, welche entlang der zumindest einen Förderleitung, vorzugsweise unmittelbar vor und/oder im Messraum, angeordnet ist, und welche dazu eingerichtet ist, die Luftströmung im Bereich des Messraums zumindest teilweise abzulösen und/oder zu verwirbeln.

In Folge dieser Maßnahme resultiert während des Ausbringprozesses innerhalb der pneumatisch beaufschlagten Förderleitung eine Luftströmung, welche im Bereich des Messraums, insbesondere der Sensoreinrichtung bzw. des Sensorsichtfelds, verwirbelt ist. Die Strömungsabrisskante ist dabei derart ausgebildet, dass die entlang der Förderleitung zumindest weitestgehend in laminare Form vorliegende Luftströmung, im Bereich des Messraums sich zumindest teilweise vom Wandbereich der Förderleitung ablöst und/oderzu einer zumindest teilweise turbulenten, insbesondere Verwirbelungen aufweisenden, Luftströmung überführt ist. Derartige turbulente Strömungen bzw. Verwirbelungen verhindern zumindest weitestgehend das Absetzen von Verschmutzungen wie etwa Staub, Beize oder dergl. in den jeweiligen Rand- bzw. Wandbereichen der Förderleitung. Die Verschmutzungsneigung einer derartig ausgeführten elektronischen Vorrichtung ist somit konstruktiv auf einfache Art und Weise verringert und/oder sogar minimiert.

Darüber hinaus ist bevorzugt wenigstens eine der Verteilmaschine zugeordnete Fördereinrichtung, insbesondere nach Art eines Gebläses, vorgesehen, welche dazu eingerichtet ist, die wenigstens eine Förderleitung pneumatisch, insbesondere mittels Luft bzw. Druckluft, zu beaufschlagen. Die Fördereinrichtung und/oder die Abmessungen der Förderleitung, insbesondere der elektronischen Vorrichtung, sind bevorzugt derart ausgelegt, dass sich während des Ausbringprozesses eine weitestgehend laminare Luftströmung entlang der Förderleitung einstellt und/oder ausbildet. Insbesondere ist dabei gleichzeitig vorgesehen, dass sich die Luftströmung an der Strömungsabrisskante zumindest teilweise ablöst und sich im Wandbereich des Messraums, insbesondere an der Sensoreinrichtung, gezielt Verwirbelungen ausbilden.

Des Weiteren kann eine Sensoreinrichtung vorgesehen sein, welche nach Art eines oder mehrerer optischer Sensoren, insbesondere Infrarot- oder Radarsensoren, ausgebildet ist. Die Sensoreinrichtung ist dabei insbesondere dazu eingerichtet, das granulare Material berührungsfrei bzw. berührungslos zu erfassen und/oder zu zählen. Die Sensoreinrichtung kann dabei ferner eine Mehrzahl von zueinander zugeordneten und/oder ausgerichteten Sensorelementen umfassen, welche beispielsweise nach Art von lichtemittierenden Dioden ausgebildet sind. Eine derartige Sensoreinrichtung kann am Umfang der Förderleitung umlaufend ausgebildet sein.

In einer bevorzugten Ausführungsform der erfindungsgemäßen Vorrichtung weist die Vorrichtung wenigstens eine Ausnehmung auf, welche in einer der Strömungsabrisskante zugeordneten Weise im Bereich des Messraums angeordnet ist. Die Ausnehmung ist dabei insbesondere in einem Inneren und zusätzlich von dem Material kontaktfreien Bereich der Förderleitung ausgebildet. Bevorzugt ist die Ausnehmung dabei nach Art eines Hohlraums und/oder einer Nut ausgeführt. Die Ausnehmung kann dabei eine Größe bzw. Tiefe zwischen etwa 0,1 bis 1,0 mm, vorzugsweise zwischen 0,3 bis 0,6 mm, und besonders bevorzugt etwa 5 mm aufweisen. Darüber hinaus ist besonders bevorzugt, wenn die Ausnehmung unmittelbar vor und/oder im Messraum angeordnet bzw. ausgebildet ist. Ferner bevorzugt ist die Ausnehmung dabei derart zur Strömungsabrisskante platziert, dass Strömungsverwirbelungen zumindest teilweise in die Ausnehmung eindringen. Bei dieser Ausführungsform hat sich in überraschender Weise ein Selbstreinigungseffekt im Bereich des Messraums, insbesondere der Sensoreinrichtung bzw. des Sensorsichtfelds gezeigt, welcher hinsichtlich der Verringerung der Verschmutzungsneigung besonders vorteilhaft ist.

In einer Weiterbildung der erfindungsgemäßen Vorrichtung ist die Ausnehmung im Querschnitt der Förderleitung gesehen, insbesondere radial, von außen an der Strömungsabrisskante angeordnet und/oder ausgebildet. Die Ausnehmung ist dabei bevorzugt zwischen der (äußeren) Wandung der Förderleitung und der Strömungsabrisskante angeordnet.

In einer anderen bevorzugten Ausführungsform der erfindungsgemäßen Vorrichtung ist die Ausnehmung, insbesondere die Tiefe der Ausnehmung, in einer zur Luftströmung gegensätzlich orientierten und/oder weisenden Richtung ausgebildet. Die Ausnehmung erstreckt sich dabei vorzugsweise von der Höhe bzw. dem Abschnitt der Strömungsabrisskante in eine zur eigentlichen Strömungsrichtung bzw. Förderrichtung des granularen Materials entgegengesetzten Richtung. Die Ausnehmung kann dabei alternativ oder zusätzlich (nach außen hin) schräg und/oder quer zur eigentlichen Strömungsrichtung bzw. Förderrichtung angestellt und/oder orientiert sein. Eine Öffnung der Ausnehmung ist hierbei vorzugsweise zum Inneren der Förderleitung hin und/oder in einer zur Strömungsrichtung bzw. Förderrichtung weisenden Richtung orientiert. Durch eine derartige Ausführungsform ist erreicht, dass die Verwirbelungen innerhalb des Messraums und/oder von der Strömungsabrisskante zumindest teilweise bis und/oder in die Ausnehmung eindringen und/oder ausbreiten können. Sogenannte Totbereiche der Strömung, welche besonders zu Verschmutzungsablagerungen neigen, sind somit zumindest im Messraum, insbesondere vor dem Sichtfeld der Sensoreinrichtung, weitestgehend ausgeschlossen.

In einer anderen Weiterbildung der erfindungsgemäßen Vorrichtung sind die Strömungsabrisskante und die Ausnehmung am Umfang der Förderleitung umlaufend ausgebildet. Die Strömungsabrisskante und die Ausnehmung bilden dabei jeweils unmittelbar vor und/oder im Messraum einen umlaufenden Ring am Umfang der Förderleitung bzw. einer äußeren Wandung der Förderleitung. Mit anderen Worten bildet insbesondere die Ausnehmung eine umlaufende Nut und/oder Rille innerhalb der Förderleitung.

In einer weiteren bevorzugten Ausführungsform der erfindungsgemäßen Vorrichtung weist die Förderleitung wenigstens einen Querschnittsversatz auf, welcher im Bereich der Strömungsabrisskante angeordnet ist. Die Ausnehmung ist dabei am und/oder im Querschnittsversatz der Förderleitung ausgebildet. Der Querschnittsversatz ist vorzugsweise stufenartig ausgebildet und besonders bevorzugt unmittelbar vor und/oder im Messraum angeordnet. Mit anderen Worten wird die Strömungsabrisskante hierbei aus dem Querschnittsversatz der Förderleitung und der Ausnehmung, insbesondere der Nut, gebildet Der Querschnittsversatz erlaubt vorzugsweise darüber hinaus eine zumindest abschnittsweise Vergrößerung des Förderleitungs- bzw. Strömungsquerschnitts in Strömungs- bzw. Förderrichtung, sodass insbesondere die Sensoreinrichtung besonders gut vor dem geförderten Material, wie beispielsweise Saatgutkörnern und/oder Beize, geschützt ist.

Die Förderleitung kann vorzugsweise einen Querversatz von etwa 0,3 bis 1,0 mm oder mehr aufweisen. Besonders bevorzugt kann der Querversatz zumindest etwa 0,5 bis 0,7 mm betragen.

In einer weiteren Weiterbildung der erfindungsgemäßen Vorrichtung ist die Förderleitung im Bereich der Strömungsabrisskante, vorzugsweise unmittelbar vor und/oder im Messraum, zumindest abschnittsweise konisch ausgebildet. Durch die konisch ausgebildete Förderleitung ist insbesondere eine Verjüngung des Förderleitungs- bzw. Strömungsquerschnitts erreicht. Der konisch ausgebildete Abschnitt der Förderleitung ist hierbei besonders bevorzugt düsenartig ausgebildet und somit dazu eingerichtet, die Luftströmung zu beschleunigen. Aus der daraus resultierenden erhöhten Strömungsgeschwindigkeit, ist die Wirbelbildung und somit der Selbstreinigungseffekt im Bereich des Messraums, insbesondere an der Sensoreinrichtung, besonders ausgeprägt. Der konisch ausgebildete Abschnitt der Förderleitung wirkt sich außerdem positiv auf das Sprungverhalten des geförderten Materials bzw. die Körner aus, sodass unter anderem auch Ablagerungen von Beize minimiert und/oder ausgeschlossen sind. Mit anderen Worten sind unter einer Verbesserung des Sprungverhaltens reduzierte Stoßkontakte des geförderten Materials an den Wandungen der Förderleitung zu verstehen, was insbesondere aufgrund der vergleichsweise erhöhten Strömungs- bzw. Fördergeschwindigkeit erreicht ist.

Bevorzugt kann der konische Abschnitt der Förderleitung auch als Einlaufbereich für den Messraum, insbesondere die Sensoreinrichtung, bezeichnet werden. Der konisch ausgebildete Abschnitt der Förderleitung ist besonders bevorzugt dadurch erreicht, dass die Wandung der Förderleitung in diesem Abschnitt und/oder die Strömungsabrisskante zum Inneren der Förderleitung hin angestellt ist. Wandung der Förderleitung und/oder die Strömungsabrisskante kann dabei zumindest in etwa zwischen 2° und 8°, vorzugsweise zwischen 3° und 6° und insbesondere zumindest in etwa 6° betragen.

Die der Erfindung zugrunde liegende Aufgabe wird ebenso mit einer landwirtschaftlichen Verteilmaschine der eingangs genannten Art, insbesondere mit einer elektronischen Vorrichtung zum Erfassen von granularem Material, gelöst, wobei die elektronische Vorrichtung nach zumindest einem der vorgenannten bevorzugten Ausführungsformen der erfindungsgemäßen elektronischen Vorrichtung ausgeführt ist. Hinsichtlich der Vorteile und Modifikationen der erfindungsgemäßen landwirtschaftlichen Verteilmaschine wird daher zunächst auf die Vorteile und Modifikationen der erfindungsgemäßen elektronischen Vorrichtung verwiesen.

Die landwirtschaftliche Verteilmaschine kann vorzugsweise nach Art einer pneumatischen Sämaschine und/oder einer Einzelkornsämaschine ausgebildet sein. Ferner kann die Verteilmaschine wenigstens eine Verteileinrichtung mit mehreren Förderleitungen, beispielsweise nach Art eines Verteilerkopfes, aufweisen. Alternativ oder zusätzlich kann die Verteilmaschine einzelne Reiheneinheiten, beispielsweise nach Art von Säaggregaten, aufweisen. Die Förderleitungen sind dabei bevorzugt einzeln oder gruppenweise jeweils einem von mehreren Ablageeinrichtungen, beispielsweise nach Art von Sä- und/oder Düngerscharen, der Verteilmaschine zugeordnet. Die Ablageeinrichtungen sind somit über die Förderleitungen in materialleitender Weise mit wenigstens einem Vorratsbehälter der Verteilmaschine verbunden. Besonders bevorzugt ist dabei vorgesehen, dass einer oder mehreren Förderleitungen, vorzugsweise jeder Förderleitung, wenigstens eine elektronische Vorrichtung zum Erfassen von granularem Material zugeordnet ist.

Weitere Einzelheiten der Erfindung sind der Beispielsbeschreibung und den Zeichnungen zu entnehmen. Die Zeichnungen zeigen
- Fig.1: eine erfindungsgemäße landwirtschaftliche Verteilmaschine mit nebeneinander angeordneten Säaggregaten in perspektivischer Ansicht von hinten;
- Fig.2: eine Schnittansicht von der Seite eines Säaggregats mit einer Dosiervorrichtung und einer erfindungsgemäßen elektronischen Vorrichtung;
- Fig.3A: eine vergrößerte schematische Schnittansicht der elektronischen Vorrichtung aus der Fig.2; und
- Fig.3B: ein Messraum der elektronischen Vorrichtung aus Fig.3A in Detailansicht.

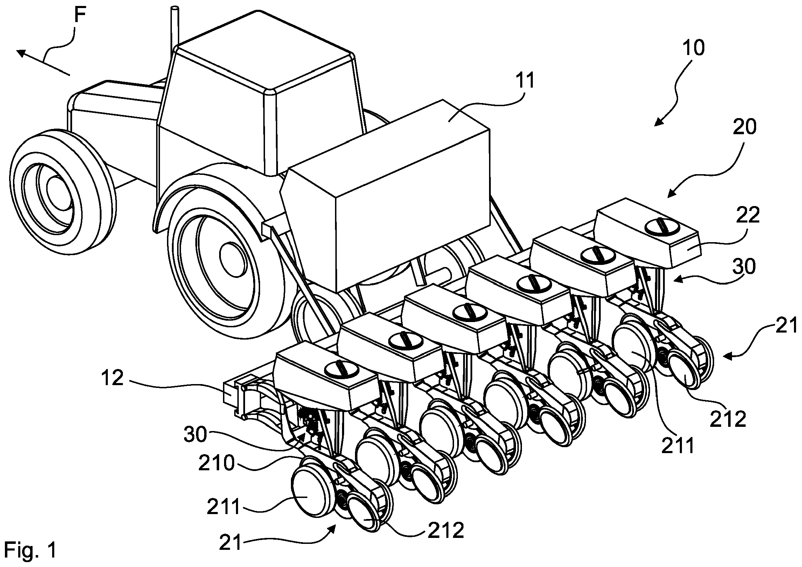

Eine als gezogene Sämaschine, insbesondere Einzelkornsämaschine, ausgebildete landwirtschaftliche Verteilmaschine 10 zum Ausbringen von granularem Material G, insbesondere Saatgut und/oder Dünger, ist in der Fig.1 gezeigt. Die Verteilmaschine 10 weist wenigstens einen Bevorratungsspeicher 11 und einen horizontal ausgerichteten Querbalken 12 auf. Mittels Tragelementen sind an dem Querbalken 12 mehrere nach Art von Säaggregaten 20 ausgebildete Reiheneinheiten befestigt.

Jedes der einzelnen Säaggregate 20 weist einen Vorratsbehälter 22 zur Bevorratung des auszubringenden granularen bzw. körnigen Materials G auf. Der untere Bereich des Vorratsbehälters 22 ist als Auslaufbereich ausgestaltet, in welchem wenigstens eine Auslauföffnung angeordnet ist. Über die Auslauföffnung wird das auszubringende Material G einer als Vereinzelungsvorrichtung ausgebildeten Dosiervorrichtung 30 zugebracht, welche unterhalb des Vorratsbehälters 22 angeordnet ist.

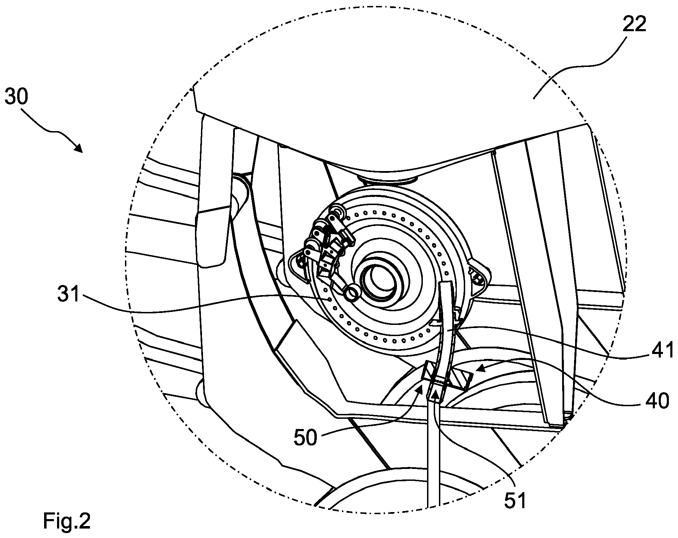

Die Dosiervorrichtung 30, in vergrößerter Schnittansicht in Fig.2 zu sehen, ist nach Art einer Überdruckvereinzelung ausgebildet und dazu eingerichtet, das zubringbare Material G bedarfsgerecht und/oder in einstellbaren Mengen, insbesondere in Form vereinzelter Körner, zu dosieren. Hierzu ist innerhalb der Dosiervorrichtung 30 ein um eine Drehachse rotatorisch antreibbares, insbesondere zumindest teilweise rotationssymmetrisch ausgebildetes, Vereinzelungselement 31 angeordnet. Das Vereinzelungselement 31 ist hierbei zumindest teilweise als kreisförmige Scheibe ausgebildet. Alternativ zur dargestellten Ausführungsform kann das Vereinzelungselement 31 auch zumindest teilweise trommel- oder zylinderartig ausgebildet sein. Ferner kann die Dosiervorrichtung 30 alternativ auch als Unterdruckvereinzelung ausgebildet sein. Darüber hinaus ist alternativ oder zusätzlich denkbar, dass das granulare Material G zumindest teilweise mittels Schwerkraft aus dem Vorratsbehälter 31 und/oder durch die Dosiervorrichtung 30 förderbar ist.

Das granulare Material G wird hierbei (einzeln) vom Vereinzelungselement 31 aufgenommen und in einer Rotationsrichtung transportiert bzw. mitgetragen und an eine der Dosiervorrichtung 30 nachgeordnete elektronische Vorrichtung 40 ausgegeben und/oder übergeben. Das granulare Material G wird anschließend durch die elektronische Vorrichtung 40 gefördert und an einer definierten Position an ein Ausbringorgan 21 übergeben. Das Ausbringorgan 21 umfasst als Scheibenschare ausgebildete Furchenöffnungselemente 210, Tiefenführungselemente 211 sowie Vorrichtungen 212 zum Schließen einer Furche.

Die hier gezeigte elektronische Vorrichtung 40 ist nach Art eines Optogebers ausgebildet und dazu eingerichtet, das durch die landwirtschaftliche Verteilmaschine 10, insbesondere das Säaggregat 20, geförderte Material G zu erfassen. Die elektronische Vorrichtung 40 umfasst zumindest eine pneumatisch beaufschlagte Förderleitung 41, welche im Querschnitt gesehen weitestgehend rund bzw. kreis- und/oder ovalförmig ausgebildet ist und durch welche das granulare Material G gefördert wird.

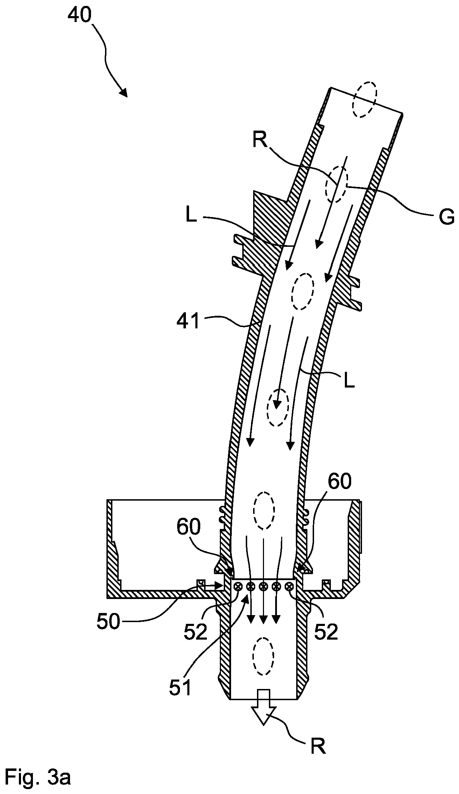

Wie in Fig.3A besonders gut zu sehen ist, umfasst die elektronische Vorrichtung 40 zumindest eine Sensoreinrichtung 50, welche dazu eingerichtet ist, das granulare Material G, insbesondere in Form von vereinzelten Körnern, berührungsfrei innerhalb eines entlang der Förderleitung 41 angeordneten Messraums 51 der Sensoreinrichtung 50 zu erfassen. Ebenfalls zu erkennen, ist die anhand von Stromlinien angedeutet Luftströmung L, welche während dem Ausbringprozess in einer Förderrichtung R durch die Förderleitung 41 geleitet wird.

Innerhalb der elektronischen Vorrichtung 40 ist erfindungsgemäß wenigstens eine Strömungsabrisskante 60 vorgesehen, welche entlang der Förderleitung 41, insbesondere unmittelbar vor dem Messraum 51, angeordnet ist. Alternativ oder zusätzlich kann wenigstens eine Strömungsabrisskante 60 auch im bzw. innerhalb des Messraums 51 angeordnet sein.

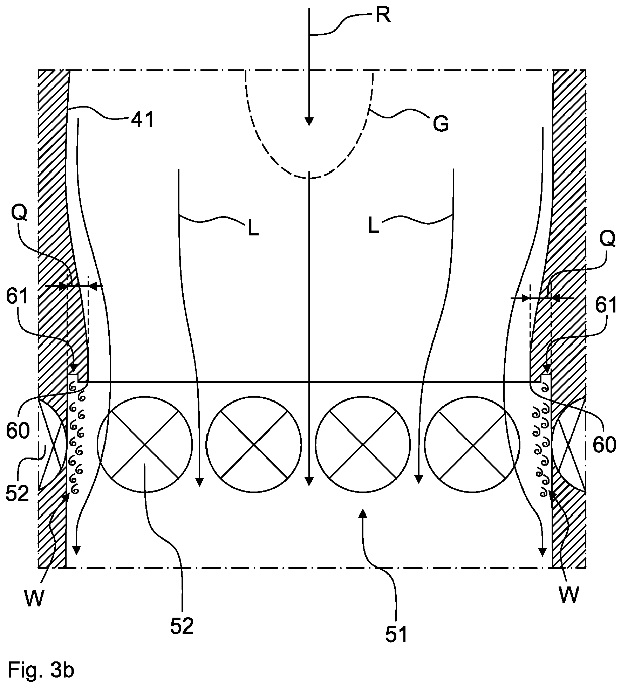

Wie in der Fig.3B besser zu erkennen ist, ist die Strömungsabrisskante 60 dazu eingerichtet, die Luftströmung L im Bereich des Messraums 51 zumindest teilweise abzulösen und/oder zu verwirbeln. Somit bilden sich während des Ausbringprozesses entlang des Messraums 51, insbesondere vor der Sensoreinrichtung 50 bzw. dem Sensorsichtfeld, Verwirbelungen W aus. Durch die Luftströmung L und/oder das Material G mitgetragene Verschmutzungen, beispielsweise in Form von Staubpartikeln, Flüssigkeiten und/oder Beize, werden von derartigen Verwirbelungen W zumindest weitestgehend von den Wand- bzw. Randbereichen der Förderleitung abgetragen. Eine Ansammlung derartiger Verschmutzungen innerhalb des Messraums 51, insbesondere der Sensoreinrichtung 50, wird somit zumindest nahezu ausgeschlossen.

Darüber hinaus ist zusätzlich eine Ausnehmung 61 vorgesehen, welche in einer der Strömungsabrisskante 60 zugeordneten Weise im Bereich des Messraums 51 angeordnet und/oder ausgebildet ist. Die Ausnehmung 61 ist im gezeigten Ausführungsbeispiel unmittelbar vor Messraum 51 angeordnet, wobei eine Platzierung innerhalb des Messraums 51 ebenso denkbar wäre. Wie ferner zu erkennen ist, ist die Ausnehmung 61 nach Art eines Hohlraums und/oder einer Nut ausgebildet.

Wie außerdem zu sehen, ist die Ausnehmung 61 radial von außen an der Strömungsabrisskante 60 angeordnet und zusätzlich, insbesondere der tiefste Punkt der Ausnehmung 61, in einer zur Luftströmung L bzw. Förderrichtung R gegensätzlichen Richtung orientiert. Die Tiefe der Ausnehmung 61 beträgt in diesem Ausführungsbeispiel etwa 0,5 mm, wobei alternativ auch eine Tiefe von etwa 0,2 bis 1,0 mm oder mehr denkbar wäre.

Die Förderleitung 41 weist außerdem wenigstens einen Querschnittsversatz Q auf, welcher im Bereich der Strömungsabrisskante 60 angeordnet und nach Art einer Stufe ausgebildet ist. Die Ausnehmung 61 ist wiederrum so platziert, dass sie innerhalb des Querschnittsversatzes Q ausgebildet ist. Insbesondere anhand des Querschnittversatzes Q ist erreicht, dass das granulare Material G weitestgehend kontaktlos an der Sensoreinrichtung 50, insbesondere den Sensorelementen 52, vorbeigeleitet wird. Darüber hinaus wird mittels des Querschnittversatzes Q eine Verstärkung der Wirbelbildung W erreicht, welche für einen Selbstreinigungseffekt der Sensoreinrichtung 50 bzw. des Messraums 51 besonders vorteilhaft ist.

Die Förderleitung 41 ist im Bereich der Strömungsabrisskante 60, insbesondere unmittelbar vor dem Messraum 51, zumindest abschnittsweise konisch ausgebildet, so dass die Strömungsgeschwindigkeit zumindest im Bereich des Messraums 51 erhöht und der Selbstreinigungseffekt noch weiter verbessert ist.

Weiterhin ist noch zu erwähnen, dass die Strömungsabrisskante 60 und die Ausnehmung 61 im gezeigten Ausführungsbeispiel am Umfang der Förderleitung 41 umlaufend ausgebildet sind. Sowohl die Strömungsabrisskante 60 als auch die Ausnehmung 61 bilden innerhalb der Förderleitung 41, insbesondere im Bereich des Messraums 51, einen umlaufenden Ring.

Darüber hinaus sei explizit erwähnt, dass die in diesem Ausführungsbeispiel dargestellte Sämaschine 10 auch nach anderen Arten von pneumatischen Sämaschinen ausgebildet sein kann. Beispielsweise sind auch Großflächensämaschinen und/oder landwirtschaftliche Säkombinationen denkbar. Des Weiteren wäre auch vorstellbar, dass die gezeigte erfindungsgemäße elektronische Vorrichtung 40 alternativ oder zusätzlich auch an einer anderen Position der Verteilmaschine 10 zum Erfassen von granularem Material G angeordnet sein kann. Beispielsweise wäre eine der Verteilmaschine 10 zugeordnete (zentrale) Verteileinrichtung nach Art wenigstens eines Verteilerkopfes denkbar, an der eine oder mehrere derartiger elektronischer Vorrichtung 40 angeordnet sind. Darüber hinaus wäre eine derartige elektronische Vorrichtung 40 ebenso für den Einsatz an landwirtschaftlichen und/oder kommunalen Streumaschinen oder dergl. vorstellbar.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind.

### Bezugszeichenliste

- 10: landwirtschaftliche Verteilmaschine
- 11: Bevorratungsspeicher
- 20: Säaggregat
- 21: Ausbringorgan
- 210: Furchenöffnungselemente
- 211: Tiefenführungselemente
- 212: Vorrichtung zum Schließen einer Furche
- 22: Vorratsbehälter
- 30: Dosiervorrichtung
- 31: Vereinzelungselement
- 40: elektronische Vorrichtung
- 41: Förderleitung
- 50: Sensoreinrichtung
- 51: Messraum
- 52: Sensorelemente
- 60: Strömungsabrisskante
- 61: Ausnehmung

- F: Fahrtrichtung
- G: granulares Material
- L: Luftströmung
- Q: Querschnittsversatz
- R: Förderrichtung
- W: Verwirbelungen, Wirbel

## Patentansprüche

1. Elektronische Vorrichtung (40) zum Erfassen von granularem Material (G), insbesondere Saatgut und/oder Dünger, innerhalb einer landwirtschaftlichen Verteilmaschine (10), mit
- wenigstens einer Förderleitung (41), durch die das granulare Material (G) mittels Luftströmung (L) förderbar ist, und
- zumindest eine der Förderleitung (41) zugeordnete Sensoreinrichtung (50), welche dazu eingerichtet ist, das granulare Material (G), insbesondere in Form von vereinzelten Körnern, berührungsfrei innerhalb eines entlang der Förderleitung (41) angeordneten Messraums (51) der Sensoreinrichtung (50) zu erfassen,
**gekennzeichnet durch** wenigstens eine Strömungsabrisskante (60), welche entlang der Förderleitung (41), vorzugsweise unmittelbar vor und/oder im Messraum (51), angeordnet ist, und welche dazu eingerichtet ist, die Luftströmung (L) im Bereich des Messraums (51) zumindest teilweise abzulösen und/oder zu verwirbeln.

2. Vorrichtung nach Anspruch 1, **gekennzeichnet durch** eine Ausnehmung (61), vorzugsweise nach Art eines Hohlraums und/oder einer Nut, welche in einer der Strömungsabrisskante (60) zugeordneten Weise im Bereich des Messraums (51), vorzugsweise unmittelbar vor und/oder im Messraum (51), angeordnet ist.

3. Vorrichtung nach Anspruch 2, **dadurch gekennzeichnet, dass** die Ausnehmung (61) im Querschnitt der Förderleitung (41) gesehen, insbesondere radial, von außen an der Strömungsabrisskante (60) angeordnet und/oder ausgebildet ist.

4. Vorrichtung nach zumindest einem der vorgenannten Ansprüche 2 bis 3, **dadurch gekennzeichnet, dass** die Ausnehmung (61), insbesondere die Tiefe der Ausnehmung (61), in einer zur Luftströmung (L) gegensätzlich orientierten und/oder weisenden Richtung ausgebildet ist.

5. Vorrichtung nach zumindest einem der vorgenannten Ansprüche 2 bis 4, **dadurch gekennzeichnet, dass** die Strömungsabrisskante (60) und die Ausnehmung (61) am Umfang der Förderleitung (41) umlaufend ausgebildet sind.

6. Vorrichtung nach zumindest einem der vorgenannten Ansprüche 2 bis 5, **dadurch gekennzeichnet, dass** die Förderleitung (41) wenigstens einen, vorzugsweise stufenartigen, Querschnittsversatz (Q) aufweist, welcher im Bereich der Strömungsabrisskante (60), vorzugsweise unmittelbar vor und/oder im Messraum (51), angeordnet ist, wobei die Ausnehmung (61) am Querschnittsversatz (Q) ausgebildet ist.

7. Vorrichtung nach zumindest einem der vorgenannten Ansprüche 1 bis 6, **dadurch gekennzeichnet, dass** die Förderleitung (41) im Bereich der Strömungsabrisskante (60), vorzugsweise unmittelbar vor und/oder im Messraum (51), zumindest abschnittsweise konisch ausgebildet ist.

8. Landwirtschaftliche Verteilmaschine (10) zum Ausbringen von granularem Material (G), insbesondere Saatgut und/oder Dünger, mit einer elektronischen Vorrichtung (40) zum Erfassen von granularem Material (G), **dadurch gekennzeichnet, dass** die elektronische Vorrichtung (40) zum Erfassen von granularem Material (G) nach zumindest einem der vorgenannten Ansprüche 1 bis 7 ausgebildet ist.
